# FASCICULE DE BREVET EUROPEEN

(11) **EP 0 839 680 B1**
(45) Date de publication et mention de la délivrance du brevet: **10.05.2000**
(21) Numéro de dépôt: 97402611.4
(22) Date de dépôt: 03.11.1997
(51) Int. Cl.: B60K 13/04, F16F 1/373, F16F 3/087, F16L 3/16

(54) **Suspente pour tubulure d'échappement de véhicule automobile ; ensemble comprenant une telle suspente**
Aufhängung von Auspuffanlagen
Automobile exhaust system suspension

(30) Priorité: 05.11.1996 FR 9613443
(43) Date de publication de la demande: 06.05.1998
(73) Titulaire: HUTCHINSON, 75008 Paris (FR)
(72) Inventeur: Monneau, Jean-Pierre, Julien, 28220 St Hilaire S/Yerre (FR); Larmande, Franck, Georges, 28200 Chateaudun (FR); Sauvage, Sylvain, 28200 Chateaudun (FR)
(74) Mandataire: Picard, Jean-Claude Georges

(56) Documents cités:
- EP-A- 0 296 974
- US-A- 4 361 304
- US-A- 4 634 088

## Description

La présente invention concerne une suspente pour tubulure d'échappement de véhicule automobile, comportant une armature supérieure propre à être assujettie à la caisse du véhicule et une armature inférieure propre à être assujettie à une tubulure d'échappement, ces deux armatures étant reliées l'une à l'autre par un système élastique.

Le but de la présente invention est d'obtenir une grande souplesse de la suspente en direction verticale (direction Z) sous précharge, c'est-à-dire lorsque la suspente, accrochée à la caisse d'un véhicule, supporte une tubulure d'échappement au repos, mais avec bien entendu une forte augmentation de la raideur lorsque s'exercent sur la tubulure d'importants efforts dans le sens vertical descendant. On doit aussi obtenir un bon amortissement des vibrations dans cette direction Z, pour que la tubulure d'un véhicule en marche ne transmette que le minimum de vibrations à la caisse.

Il est également souhaitable que la suspente présente une grande souplesse selon la direction longitudinale (X) du véhicule, pour encaisser la dilatation de la tubulure d'échappement sous l'effet de la température.

Enfin on doit obtenir aussi une grande souplesse vis-à-vis des efforts s'exerçant dans la direction (Y) transversale, mais avec une limitation des déplacements dans cette direction et si possible sans nuire à la souplesse dans la direction Z.

Les suspentes actuellement connues ne répondent pas à l'ensemble de ces conditions, notamment quant à la limitation des débattements dans la direction transversale Y.

Les propriétés souhaitables susindiquées sont toutes obtenues, conformément à la présente invention, grâce à une suspente du type indiqué au début, caractérisée en ce que ledit système élastique comporte deux anneaux élastiques croisés incorporant chacun une bague en un matériau à haut module d'élasticité enrobée de caoutchouc, ces anneaux étant fixés à l'une et à l'autre armature en deux emplacements diamétralement opposés de leur circonférence. On pourra prévoir par exemple que lesdits anneaux ont au repos une forme générale circulaire ou légèrement elliptique, et ont une section transversale plate.

On comprend qu'une telle suspente pourra avoir une très grande souplesse vis-à-vis des efforts de traction verticaux (en direction Z) s'exerçant entre les deux armatures, puisque les anneaux pourront se déformer très facilement, en s'ovalisant, jusqu'à ce que les sections s'étendant entre les deux armatures, à l'origine en arcs de cercle, se tendent suffisamment pour être presque rectilignes. A partir de ce moment interviendra la raideur en traction des bagues en matériau à haut module d'élasticité des deux anneaux, ce qui fournira la limitation souhaitable de l'allongement de la suspente sous l'effet des efforts verticaux.

On comprend aussi qu'une telle suspente présentera également une grande souplesse vis-à-vis des efforts horizontaux s'exerçant dans la direction transversale (Y) perpendiculaire au plan vertical médian de la suspente. En effet, de tels efforts soumettront seulement l'un des anneaux à des efforts d'extension l'ovalisant jusqu'à la limite d'extension, et la très faible raideur en résultant ne sera que très peu augmentée par la présence de l'autre anneau, qui subira au contraire une compression, éventuellement accompagnée d'une flexion. La limitation du déplacement de la tubulure d'échappement dans cette direction sera assurée seulement par celui des anneaux (selon le sens du déplacement) qui sera soumis à une extension, mais cet effet sera suffisant, eu égard au fait que les efforts en direction horizontale et transversale seront en principe plus réduits (force centrifuge dans les virages), que les efforts verticaux.

Vis-à-vis des efforts s'exerçant en direction horizontale et longitudinale (direction X) perpendiculaire à la précédente, la suspente opposera aussi une faible raideur, du fait du "roulement" des deux anneaux inclinés entre les armatures.

Quant à l'effet d'amortissement des vibrations vis-à-vis des différents efforts, il sera obtenu grâce au caoutchouc (naturel ou synthétique) interposé entre les armatures et les bagues résistantes des anneaux.

Avantageusement, et pour optimiser les effets susdécrits, la suspente pourra encore se caractériser en ce que l'angle sous lequel se croisent lesdits anneaux au repos est d'environ 90°, ces anneaux étant angulairement espacés, de part et d'autre du plan vertical médian de la suspente, d'un angle d'environ 45° par rapport à ce plan.

Pour limiter les déformations des anneaux tout en maintenant une très faible raideur de la suspente sous effort statique au repos, on pourra encore prévoir que dans les deux zones diamétralement opposées de leurs croisements lesdits anneaux sont solidarisés l'un de l'autre, ces deux zones étant en outre reliées l'une à l'autre par un bras élastique diamétral apte à subir un flambage.

L'agencement est tel que ce flambage du bras se produise dès que la suspente supportera la charge statique de la tubulure, la mise en flambage du bras étant produite par l'ovalisation des anneaux et le rapprochement consécutif, l'une de l'autre, des deux dites zones diamétralement opposées.

Pour ce qui est des armatures, elles seront avantageusement constituées chacune d'une plaque comportant une partie centrale propre à être assujettie à la caisse du véhicule ou à ladite tubulure, et deux parties extrêmes servant de supports auxdits anneaux et pliées chacune en oblique vers l'intérieur de l'anneau correspondant.

Ce pliage sera bien entendu fonction de l'inclinaison des anneaux, pour que le plan de chaque anneau s'étende perpendiculairement au plan desdites parties extrêmes des armatures.

Cette suspente pourra encore se caractériser en ce qu'elle comporte deux butées élastiques se faisant face et dirigées l'une vers l'autre, en étant respectivement portées par la partie centrale desdites plaques, ce qui permettra de limiter l'écrasement de la suspente sous l'effet des efforts ascendants exercés sur elle par la tubulure d'échappement.

La présente invention porte encore sur l'agencement général d'un ensemble comprenant une caisse de véhicule, une suspente conforme à ce qui précède, fixée à ladite caisse, et une tubulure d'échappement fixée à ladite suspente.

Compte-tenu des considérations exposées plus haut, un tel ensemble pourra être caractérisé en ce que la suspente est orientée de telle sorte que la ligne reliant les zones diamétralement opposées des croisements desdits anneaux ait la même direction que l'axe longitudinal du véhicule.

Cet ensemble pourra encore se caractériser en ce que la charge statique de ladite tubulure d'échappement au repos soumet lesdits anneaux à des efforts tels que ledit bras élastique diamétral subit un flambage.

Un mode d'exécution de l'invention va maintenant être décrit à titre d'exemple nullement limitatif avec référence aux figures du dessin annexé dans lequel :
- la figure 1 est une vue en coupe de la suspente selon la ligne I-I de la figure 2, dans un ensemble conforme à l'invention, la suspente étant supposée au repos, c'est-à-dire non soumise à la charge statique de la tubulure d'échappement ;
- la figure 2 est une vue de côté de cette suspente;
- la figure 3 est le diagramme des déformations de la suspente en direction verticale lorsqu'elle est soumise à des efforts F_{Z} ;
- la figure 4 est une vue de côté de la suspente soumise à la charge statique d'une tubulure d'échappement ; et
- la figure 5 est une vue de côté montrant la déformation de la suspente lorsqu'elle est soumise à des efforts longitudinaux dans la direction X.

Sur le dessin, on a représenté les axes de référence, qui sont l'axe Z des efforts verticaux, l'axe X des efforts longitudinaux (direction de la tubulure d'échappement), et l'axe Y des efforts transversaux.

La suspente comprend un anneau extérieur 1, croisé à 90° avec un anneau intérieur 2 qui le pénètre et dont le diamètre extérieur est avant montage légèrement supérieur au diamètre intérieur de l'anneau extérieur 1. De la sorte, l'introduction de l'anneau 2 dans l'anneau 1 provoque leur ovalisation : l'anneau 2 est élargi en direction verticale et l'anneau 1 en direction horizontale, de sorte qu'une compensation s'établit, leur permettant d'avoir pratiquement les mêmes entraxes au niveau des parties pliées extrêmes 31-41 et 32-42 des armatures en tôle 3 et 4, l'une reliée à la caisse 5 du véhicule par une vis 33 et l'autre à la tubulure d'échappement 6 par une vis 43.

Il est à noter que l'on pourrait aussi utiliser deux anneaux ayant au départ exactement les mêmes dimensions, ce qui augmenterait notablement leur ovalisation lors du montage. Au niveau des fixations les entraxes seraient alors différents. Le problème serait toutefois facilement résolu en prévoyant entre les parties extrêmes pliées 31 et 41, servant d'appui à l'anneau extérieur 1, un écartement inférieur à l'écartement entre les parties extrêmes pliées 32 et 42 servant d'appuis à l'anneau intérieur 2, lequel aurait alors une hauteur sensiblement supérieure à celle de l'anneau extérieur. Les armatures 3 et 4 seraient alors dissymétriques, ce qui ne présenterait ni inconvénient ni difficulté de fabrication.

Quel que soit le mode de réalisation, les anneaux seront avantageusement constitués chacun d'une bague B enrobée de caoutchouc naturel ou synthétique C adhérisé aux plaques 3 et 4 au niveau des extrémités pliées 31-32 et 41-42. Les bagues pourront être réalisées en tout matériau approprié à haut module d'élasticité : tissu métallique, fibres de verre ou de carbone, bande métallique, etc.

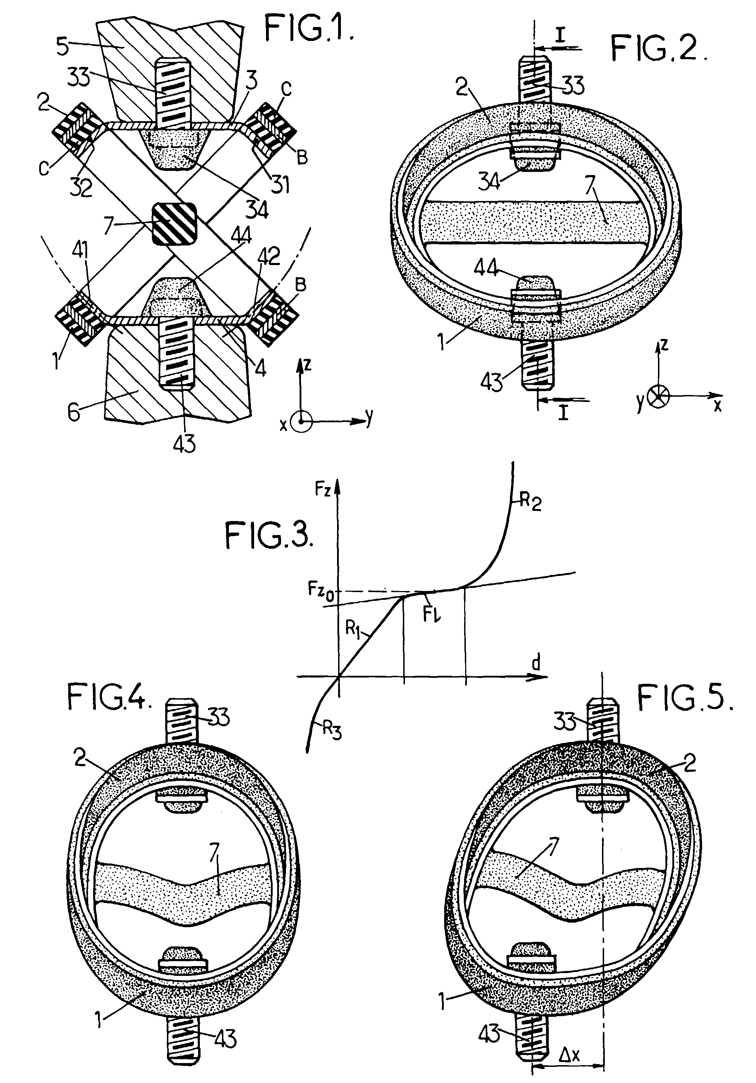

En 7 on a représenté un bras horizontal en caoutchouc reliant les deux zones diamétralement opposées de l'anneau intérieur 2, au niveau de sa jonction avec l'anneau extérieur 1. Du caoutchouc peut être surmoulé sur ces zones de jonction pour éviter toute discontinuité entre les anneaux et assurer leur solidarisation à ce niveau. La figure 4 montre le flambage du bras 7 lorsque la suspente est soumise à un effort statique F_{Z0} correspondant au poids de la tubulure d'échappement au repos. La figure 3 montre le diagramme des allongements verticaux d de la suspente en fonction des efforts verticaux F_{Z} exercés sur elle par la tubulure. On voit que de part et d'autre de la zone de flambage F₁ on obtient des réponses R1 et R2 à forte raideur, la zone inférieure R1 étant due à la forte raideur en compression du bras 4 avant flambage, et la zone supérieure R2 étant due à la mise en extension des bagues B des anneaux. La zone à forte raideur R3 correspond à une mise en butée de la suspente lors d'efforts verticaux ascendants exercés sur elle par la tubulure 6. Cette mise en butée peut être commodément obtenue par les blocs de caoutchouc 34 et 44 surmoulés sur les têtes des vis 33 et 43 et propres à venir buter de part et d'autre du bras 7 lors de l'écrasement de la suspente.

Sur la figure 1 on a représenté par des arcs de cercle en tirets le déplacement des appuis 41 et 42 lorsque la tubulure 6 soumet la suspente à des efforts transversaux, avec les effets élastiques et de limitation décrits plus haut.

La figure 5, enfin, montre la déformation de la suspente lorsque la tubulure 6, par exemple sous l'effet d'une dilatation Δx, la soumet à des efforts longitudinaux. Il y a alors une faible déformation des anneaux, ce qui explique encore la faible raideur de la suspente dans cette direction X, avec une rigidité verticale (direction Z) peu perturbée, quel que soit le déportement en X.

## Revendications

1. Suspente pour tubulure d'échappement de véhicule automobile, comportant une armature supérieure (3) propre à être assujettie à la caisse (5) du véhicule et une armature inférieure (4) propre à être assujettie à une tubulure (6) d'échappement, ces deux armatures étant reliées l'une à l'autre par un système élastique , caractérisée en ce que ledit système élastique comporte deux anneaux élastiques (1, 2) croisés incorporant chacun une bague (B) en un matériau à haut module d'élasticité enrobée de caoutchouc (C), ces anneaux (1, 2) étant fixés à l'une et à l'autre armature (3, 4) en deux emplacements diamétralement opposés de leur circonférence.

2. Suspente selon la revendication 1, caractérisée en ce que l'angle sous lequel se croisent lesdits anneaux (1, 2) au repos est d'environ 90°, ces anneaux étant angulairement espacés, de part et d'autre du plan vertical médian de la suspente, d'un angle d'environ 45° par rapport à ce plan.

3. Suspente selon la revendication 1 ou 2, caractérisée en ce que dans les deux zones diamétralement opposées de leurs croisements lesdits anneaux (1, 2) sont solidarisés l'un de l'autre, ces deux zones étant en outre reliées l'une à l'autre par un bras élastique diamétral (7) apte à subir un flambage.

4. Suspente selon l'une quelconque des revendications précédentes, caractérisée en ce que lesdits anneaux (1, 2) ont au repos une forme générale circulaire ou légèrement elliptique, et ont une section transversale plate.

5. Suspente selon l'une quelconque des revendications précédentes, caractérisée en ce que lesdites armatures sont constituées chacune d'une plaque (3, 4) comportant une partie centrale propre à être assujettie à la caisse (5) du véhicule ou à ladite tubulure (6), et deux parties extrêmes (31, 32 ; 41, 42) servant de supports auxdits anneaux (1, 2) et pliées chacune en oblique vers l'intérieur de l'anneau correspondant.

6. Suspente selon la revendication 5, caractérisée en ce qu'elle comporte deux butées élastiques (34, 44) se faisant face et dirigées l'une vers l'autre, en étant respectivement portées par la partie centrale desdites plaques (3, 4).

7. Ensemble comprenant une caisse (5) de véhicule, une suspente conforme à l'une quelconque des revendications précédentes, fixée à ladite caisse, et une tubulure d'échappement (6) fixée à ladite suspente, caractérisé en ce que cette dernière est orientée de telle sorte que la ligne reliant les zones diamétralement opposées des croisements desdits anneaux (1, 2) ait la même direction que l'axe longitudinal (X) du véhicule.

8. Ensemble selon la revendication 7, comprenant une suspente conforme à la revendication 3, caractérisé en ce que la charge statique de ladite tubulure (6) d'échappement au repos soumet lesdits anneaux (1, 2) à des efforts tels que ledit bras élastique (7) diamétral subit un flambage.

## Patentansprüche

1. Aufhängeeinrichtung für einen Auspuffrohrstutzen eines Kraftfahrzeuges umfassend eine obere Armatur (3), die an der Fahrzeugkarosserie (5) montierbar ist, und eine untere Armatur (4), die an einem Auspuffrohrstutzen (6) montierbar ist, wobei diese beiden Armaturen durch eine elastische Vorrichtung miteinander verbunden sind, dadurch gekennzeichnet, daß die elastische Vorrichtung zwei überkreuzte elastische Ringe (1, 2) umfaßt, wobei jeder einen mit Gummi (C) ummantelten Reif (B) aus einem Material mit einem hohen Elastizitätsmodul einbettet, wobei diese Ringe (1, 2) an der einen sowie an der anderen Armatur (3, 4) an zwei diametral gegenüberliegenden Stellen ihres Umfanges befestigt sind.

2. Aufhängeeinrichtung nach Anspruch 1, dadurch gekennzeichnet, daß der Winkel, unter dem sich die Ringe (1, 2) kreuzen, in Ruhe ungefähr 90° ist, wobei diese Ringe angular auf beiden Seiten der vertikalen Mittelebene der Aufhängeeinrichtung um einen Winkel von ungefähr 45° bezüglich dieser Ebene beabstandet sind.

3. Aufhängeeinrichtung nach Anspruch 1 oder 2, dadurch gekennzeichnet, daß an den beiden diametral gegenüberliegenden Bereichen ihrer Kreuzungen die Ringe (1, 2) miteinander fest verbunden sind, wobei außerdem diese beiden Bereiche miteinander durch einen elastischen diametralen Arm (7) verbunden sind, der ausgelegt ist, eine Knickung zu erfahren.

4. Aufhängeeinrichtung nach einem der vorangegangenen Ansprüche, dadurch gekennzeichnet, daß die Ringe (1, 2) in Ruhe eine allgemeine kreisförmige oder leicht elliptische Form und einen flachen Querschnitt aufweisen.

5. Aufhängeeinrichtung nach einem der vorangegangenen Ansprüche, dadurch gekennzeichnet, daß die Armaturen jeweils aus einer Platte (3, 4) gebildet sind, die ein mittiges Teil, das an der Fahrzeugkarosserie (5) oder an dem Rohrstutzen (6) montierbar ist, und zwei Endteile (31, 32; 41, 42) umfaßt, die als Lager für die Ringe (1, 2) dienen und jeweils schräg zum Inneren hin des entsprechenden Ringes gebogen sind.

6. Aufhängeeinrichtung nach Anspruch 5 umfassend zwei elastische Anschläge (34, 44), die sich gegenüberliegen und aufeinanderzu gerichtet sind, wobei sie jeweils von dem mittigen Teil der Platten (3, 4) getragen sind.

7. Gesamtanordnung umfassend eine Fahrzeugkarosserie (5), eine an der Karosserie befestigte Aufhängeeinrichtung gemäß einem der vorangegangenen Ansprüche, und einen Auspuffrohrstutzen (6), der an der Aufhängeeinrichtung befestigt ist, dadurch gekennzeichnet, daß letztere derart ausgerichtet ist, daß die die diametral gegenüberliegenden Bereiche der Kreuzungen der Ringe (1, 2) verbindende Linie die gleiche Richtung wie die Längsachse (X) des Fahrzeugs aufweist.

8. Gesamtanordnung nach Anspruch 7 umfassend eine Aufhängeeinrichtung nach Anspruch 3, dadurch gekennzeichnet, daß die statische Last des Auspuffrohrstutzens (6) in Ruhe die Ringe (1, 2) derart beansprucht, daß der elastische diametrale Arm (7) eine Knickung erfährt.

## Claims

1. A suspension for a motor vehicle exhaust pipe, the suspension comprising an upper strength member (3) suitable for securing to the body (5) of the vehicle, and a lower strength member (4) suitable for securing to an exhaust pipe (6), the two strength members being interconnected by a resilient system, the suspension being characterized in that said resilient system comprises two crossed resilient loops (1, 2) each incorporating a ring (B) of material having a high modulus of elasticity that is coated in rubber (C), the loops (1, 2) being fixed to each of the strength members (3, 4) at two diametrically-opposite locations of their respective circumferences.

2. A suspension according to claim 1, characterized in that the angle at which said loops (1, 2) cross at rest is about 90°, the loops being angularly spaced apart on either side of the vertical midplane of the suspension by an angle of about 45° relative to said plane.

3. A suspension according to claim 1 or 2, characterized in that in the two diametrically-opposite zones where said loops (1, 2) cross they are secured to each other, said two zones also being interconnected by a diametral resilient strut (7) suitable for being subjected to buckling.

4. A suspension according to any preceding claim, characterized in that said loops (1, 2) at rest are generally circular or slightly elliptical in shape, and are of flat cross-section.

5. A suspension according to any preceding claim, characterized in that each of said strength members is constituted by a plate (3, 4) having a central portion suitable for being secured to the body (5) of the vehicle or to said exhaust pipe (6), and two end portions (31, 32; 41, 42) serving as supports for said loops (1, 2), each being folded obliquely towards the inside of the corresponding loop.

6. A suspension according to claim 5, characterized in that it includes two resilient abutments (34, 44) facing each other and extending towards each other, said abutments being carried by the central portions of each of said plates (3, 4) respectively.

7. An assembly comprising a vehicle body (5), a suspension according to any preceding claim fixed to said body, and an exhaust pipe (6) fixed to said suspension, the assembly being characterized in that the suspension is oriented so that the line interconnecting the diametrically-opposite crossing zones of said loops (1, 2) extends in the same direction as the longitudinal axis (X) of the vehicle.

8. An assembly according to claim 7, including a suspension according to claim 3, characterized in that the static load of said exhaust pipe (6) at rest subjects said loops (1, 2) to forces such that said diametral resilient strut (7) is subjected to buckling.
